# EUROPEAN PATENT APPLICATION

(11) **EP 4 538 097 A1**
(43) Date of publication of application: **16.04.2025**
(21) Application number: 24205757.8
(22) Date of filing: 10.10.2024
(51) Int. Cl.: B60L 7/18, B60L 9/00, B60L 15/20, B60L 50/53, B60L 58/12, B60L 58/13, B60L 58/14, B61B 1/00, B61C 3/02, B61L 1/00, B61L 27/00

(54) **TRAIN ONBOARD CONTROL SYSTEM**

(30) Priority: 13.10.2023 GB 202315737
(71) Applicant: Hitachi Rail Limited, London EC4M 7AW (GB)
(72) Inventor: DUGOURD, Paul, London, EC4M 7AW (GB); DAUTEL, Christopher, London, EC4M 7AW (GB)
(74) Representative: Mewburn Ellis LLP

(57) **Abstract**

An onboard control system for controlling operation of a drive system of a rail vehicle or a train of coupled rail vehicles is provided. The drive system has extraction equipment to extract electrical power from an external electrical power line for onward supply to one or more traction motors of the drive system. The drive system further has an onboard energy storage system for supply of electrical power to the traction motors. The onboard energy storage system is rechargeable by receiving electrical power from the external electrical power line via the extraction equipment. The train has plural operational states which are at least partly defined by command signals from an operator of the train specifying respective amounts of torque demanded of the traction motors. The onboard control system has a database which relates the operational states to respective current limit values. The onboard control system is configured to: receive the command signals and on the basis thereof determine the present operational state of the train, and control the drive system such that electrical current passing through the extraction equipment does not exceed the current limit value from the database corresponding to the present operational state.

## Description

### Field of the Invention

The present invention relates to an onboard control system for controlling operation of a drive system of a train.

### Background

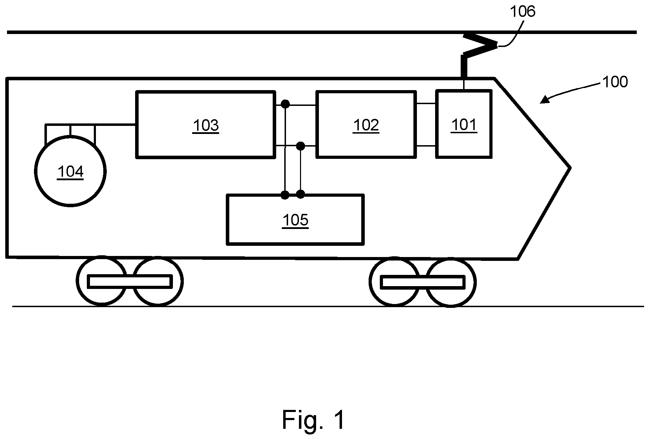

Figure 1 shows schematically a conventional rail vehicle 100 with a drive system comprising a main transformer 101 which steps down a primary AC power supplied via a pantograph 106 from an overhead line, and supplies the stepped down AC power to a line converter 102. A DC link then joins the line converter 102 to a line inverter 103 which supplies three phase AC power to drive traction motor or motors 104. An onboard energy storage system (OBESS) 105), such as lithium ion or lead batteries, connected to the DC link stores surplus power, and releases that power as needed for hybrid drive. Surplus energy from the primary power source, or energy derived from regenerative braking, can be stored in the OBESS. During acceleration, this stored energy is directed to the traction motor(s) 104, forming a "hybrid drive" that boosts the energy available from the primary power source.

Conventional drive systems for rail vehicles also include "bi-mode" systems in which the primary power can be selectably drawn from an external electrical power line (e.g. overhead line or third rail) or a generator powered by a diesel engine (known as a generator unit, or "GU"). Such drive systems can additionally include OBESSs for energy storage and hybrid drive.

With improvements in energy storage capability enabling longer distances to be travelled on non-electrified track sections, there are growing possibilities for using OBESSs as a power source for traction on an equal footing with external power lines and GUs. Thus with an improved OBESS 105, the rail vehicle 100 of Figure 1 can be operated in an externally powered first drive mode, or in a second self-powered drive mode in which electrical power for traction is provided by the OBESS 105 alone.

Indeed, more recently, "tri-mode" trains have been developed (see for example GB A 2611341) which combine external power lines, GUs and OBESSs to provide an externally powered first drive mode for sections of railway lines which have external power supply infrastructure, a hybrid self-powered second drive mode in which electrical power for traction is provided by GUs assisted by OBESSs, and a third self-powered drive mode in which electrical power for traction is provided by OBESSs alone.

The increasing energy storage capability of OBESSs allows rail vehicles to run for longer periods of time in OBESS self-powered drive modes, but also allows them to extract greater amounts of power from external power lines. Thus it is increasingly important to balance power supply from the substations which provide energy to the external power lines against energy consumption by rail vehicles in order to avoid: (i) high peak power demands than can lead to faults or shutdowns in existing power supply networks, or alternatively (ii) the installation of higher numbers of costly substations to meet such peak demands.

One option is to impose a simple cap on the permitted energy usage of individual trains. Throttling power consumption in this way can mitigate pressure over substation load capacity. However, this comes at a cost of inhibiting the performance gains that are potentially obtainable from operating rail vehicles installed with high capacity OBESSs.

Under a more sophisticated approach, the problem of high peak power demand can be addressed to an extent by e.g. switching to battery-only operation when a rail vehicle detects a drop in external power line voltage associated with an increased load on the power supply. However, while this approach can be effective at reducing peak power demands from the external supply, it does not take account of other factors that are relevant for OBESS-powered vehicles. In particular, when the OBESS has a high enough capacity to allow the vehicle to drive long distances in an OBESS-only, self-powered drive mode, more consideration needs to be given to OBESS recharging operations from overhead lines or third rails so that the OBESS is available at other times in a given journey. The alternative of only recharging OBESSs at dedicated recharging facilities is incompatible with flexible OBESS usage. However, external power lines and the contact shoes by which trains extract power from them, if exposed to the loads and consequent heat production associated with unregulated recharging operations, are at risk of failures caused by melting and welding.

The present invention has been devised in light of the above considerations.

### Summary of the Invention

In the following by a "train" we mean a single rail vehicle or a plurality of coupled rail vehicles.

In a first aspect, the present disclosure provides an onboard control system for controlling operation of a drive system of a train, wherein the drive system has extraction equipment to extract electrical power from an external electrical power line for onward supply to one or more traction motors of the drive system, and further has an onboard energy storage system for supply of electrical power to the traction motors, the onboard energy storage system being rechargeable by receiving electrical power from the external electrical power line via the extraction equipment, and wherein the train has plural operational states which are at least partly defined by command signals from an operator of the train specifying respective amounts of torque demanded of the traction motors;
wherein the onboard control system has a database which relates the operational states to respective electrical current limit values, and
wherein the onboard control system is configured to: receive the command signals and on the basis thereof determine the present operational state of the train, and control the drive system such that electrical current passing through the extraction equipment does not exceed the current limit value from the database corresponding to the present operational state.

By providing a database of operational states and respective current limit values which the control system uses to control the amount of current passing through the extraction equipment, the control system can reliably allow the drive system to fully exploit a high capacity OBESS, while avoiding causing damage to power lines and contact shoes.

Electrical power is the product of voltage (in Volts) and current (in Amps). Thus, the aforementioned electrical current limit values (and the use thereof to control the electrical current passing through the extraction equipment) can be implemented as electrical power limit values for controlling the electrical power passing through the extraction equipment. Indeed, when the external electrical power line has a constant voltage, the respective current limit values are equivalent to respective power limit values. However, as such a constant voltage cannot always be achieved in the external electrical power line, one option is for the onboard control system to be configured to monitor the voltage of the external electrical power line (e.g. using a voltage sensor), and to regulate the current limit values of the database depending on the monitored voltage. For example, the current limit values can be regulated such that the product of each current limit value and the monitored voltage is a respective constant power limit value. In this way, although the actual limit values of the database can be current limit values, the effect is to set respective power limit values for the operational states.

Typically, the onboard energy storage system comprises battery cells, such as a lithium ion battery cells. Conveniently, the onboard energy storage system may also be rechargeable by using the traction motors to perform regenerative braking, whereby during regenerative braking the command signals specify respective amounts of demanded braking torque.

The external electrical power line may be an overhead line or a third rail. The extraction equipment typically includes a contact shoe which makes running contact with the external electrical power line. In case of an overhead line, the contact shoe is typically mounted on a pantograph.

The train may have a single rail vehicle which contains the drive system, or the drive system can be distributed across several vehicles making up the train, e.g. with the extraction equipment in one vehicle and the onboard energy storage system in another vehicle. The control system can be configured to perform local control of just the drive system. Alternatively, it can be a TCMS configured to perform control not only of the drive system but also of other features of the train (including, for example, auxiliary services, signalling etc.).

The drive system may be operable under the control of the control system in:
a first drive mode in which the traction motors are supplied with electrical power from just the external electrical power line,
a second, hybrid, drive mode in which the traction motors are supplied with electrical power from the external electrical power line and the onboard energy storage system, and
a third drive mode in which the traction motors are supplied with electrical power from just the onboard energy storage system.

The control system may be further configured to receive speed measurement signals measuring the speed of the train. In this case, the operational states are also at least partly defined by the speed measurement signals.

The operational states may include: (i) train accelerating, and (ii) train cruising under traction motor zero torque or train at standstill. The control system can distinguish train accelerating from cruising and standstill by the torque demanded of the traction motors for acceleration compared with the zero torque demanded for cruising and standstill. Preferably, the operational states include: (i) train accelerating, (ii-a) train cruising under traction motor zero torque, and (ii-b) train at standstill. Speed measurement signals can be used by the control system to distinguish between cruising and standstill. The respective current limit value for train at standstill is preferably less than the respective current limit value for train cruising. This is because at standstill there is greater risk of resistive overheating at the stationary point of contact of the extraction equipment and the external power line.

The operational states may further include (iii) train regenerative braking. This state can be recognised by the control system by a demand for braking torque.

The control system may be further configured to receive location signals specifying the location of the train, and the database may relate each operational state to a respective current limit value which is a function of train location. This arrangement allows current limit values to be varied across different regions of a rail network, e.g. depending on the respective load capacities of power substations supplying electrical power to the different regions and/or depending on numbers of rail vehicles in the different regions. In this way, peak power demands on the substations can be better managed, so that substations with lower capacities experience lower peak demands.

Additionally or alternatively, the database may relate each operational state to a respective current limit value which is a function of time. This arrangement allows current limit values to be varied across different time periods. For example, traffic densities are generally lower at night, allowing more electrical power to be drawn by individual trains during night time running than daytime running,

The control system may further have a communication subsystem configured to communicate with a remote control centre and receive therefrom current limit control data, the control system being further configured to adjust the current limit value from the database corresponding to the present operational state on the basis of the current limit control data, such that electrical current passing through the extraction equipment does not exceed the adjusted current limit value. For example, the control centre can receive present locations of trains on a rail network (e.g. from the communication subsystem on each train) and determine therefrom numbers of trains in respective regions of the network served by different power substations. Using this information, the control centre can calculate the current limit control data, e.g. in the form of suitable adjustments factors to the current limits in each substation region for different operational states of the trains, the adjustments factors taking account of the numbers of trains in the respective regions. In this way, the current limits of the operational states can be adapted in real time, as train numbers vary. Preferably, the control centre also receives train timetable information for trains on the network. This allows the control centre to perform forward planning of future train numbers, e.g. to enable prediction of future current limit control data.

In a second aspect, the present disclosure provides a train including:
a drive system which has extraction equipment to extract electrical power from an external electrical power line for onward supply to one or more traction motors of the drive system, and which further has an onboard energy storage system for supply of electrical power to the traction motors, the onboard energy storage system being rechargeable by receiving electrical power from the external electrical power line via the extraction equipment, and wherein the train has plural operational states which are at least partly defined by command signals from an operator of the train specifying respective amounts of torque demanded of the traction motors; and
a control system according to the first aspect for controlling operation of the drive system.

In a third aspect, the present disclosure provides a method of controlling operation of a drive system of a train, wherein the drive system has extraction equipment to extract electrical power from an external electrical power line for onward supply to one or more traction motors of the drive system, and further has an onboard energy storage system for supply of electrical power to the traction motors, the onboard energy storage system being rechargeable by receiving electrical power from the external electrical power line via the extraction equipment, and wherein the train has plural operational states which are at least partly defined by command signals from an operator of the train specifying respective amounts of torque demanded of the traction motors;
the method including:
providing a database which relates the operational states to respective current limit values, receiving the command signals; and
on the basis of the command signals, determining the present operational state of the train, and controlling the drive system such that electrical current passing through the extraction equipment does not exceed the current limit value from the database corresponding to the present operational state.

Thus the method of the third aspect corresponds to the control system of the first aspect. Optional and preferred features of the control system of the first aspect pertain also to the method of the third aspect, unless clearly impermissible or expressly avoided. For example, the method may further include receiving speed measurement signals measuring the speed of the train, the operational states also being at least partly defined by the speed measurement signals. As another example, the method may further include receiving location signals specifying the location of the train, and the operational states may also be at least partly defined by the specified location.

In a fourth aspect, the present disclosure provides a rail network having plural regions, each region having an external electrical power line supplied with electrical power by a respective substation, the rail network further including:
plural trains of the second aspect running on the network, each train having the aforementioned communication subsystem; and
a control centre configured to communicate with the trains via their communication subsystems;
wherein each communication subsystem is configured to communicate with the control centre and receive therefrom an current limit control data, the control system of each train being further configured to adjust the current limit value from its database corresponding to the present operational state of its train on the basis of the received current limit control data, such that electrical current passing through its extraction equipment does not exceed the adjusted current limit value.

Each communication subsystem may be configured to communicate the present location of its train to the control centre. The control centre can then determine therefrom respective numbers of trains in the regions of the network, and calculate therefrom the current limit control data, e.g. in the form of suitable adjustments factors to the current limits in each substation region for different operational states of the trains, the adjustments factors taking account of the numbers of trains in the respective regions. Preferably, the control centre also receives train timetable information for trains on the network. This allows the control centre to perform forward planning of future train numbers, e.g. to enable prediction of future current limit control data.

In a fifth aspect, the present disclosure provides a method of operating trains on a rail network having plural regions, each region having an external electrical power line supplied with electrical power by a respective substation, wherein each train includes a respective drive system which has extraction equipment to extract electrical power from the external electrical power line for onward supply to one or more traction motors of the drive system, and further has an onboard energy storage system for supply of electrical power to the traction motors, the onboard energy storage system being rechargeable by receiving electrical power from the external electrical power line via the extraction equipment, and wherein each train has plural operational states which are at least partly defined by command signals from an operator of the train specifying respective amounts of torque demanded of the traction motors, wherein the method includes:
performing the method of the third aspect to control the operation of the drive system of each train;
determining the number of trains in each region of the network;
calculating, on the basis of the determined numbers, respective adjustment factors to the current limits in each region for different operational states of the trains; and
adjusting, for the drive system of each train, the current limit value from the drive system's database corresponding to the present operational state of the train on the basis of the adjustment factor corresponding to the region in which the train is located and that operational state, such that electrical current passing through the drive system's extraction equipment does not exceed the adjusted current limit value.

The invention includes the combination of the aspects and preferred features described except where such a combination is clearly impermissible or expressly avoided.

### Summary of the Figures

Embodiments and experiments illustrating the principles of the invention will now be discussed with reference to the accompanying figures in which:
**Figure 1** shows schematically a conventional rail vehicle;
**Figure 2** shows schematically a drive system of a train in relation to an external overhead electrical power line;
**Figure 3** shows schematically a rail network having an overhead line with regions served by different substations, and a control centre which communicates with trains on the network; and
**Figure 4** provides at top left a graph showing schematically traffic density in a given substation region for three successive time periods, at bottom left a graph showing schematically corresponding adjustment factors as determined by a control centre for the three time periods, and at right tables showing the effects of implementing these adjustment factors on current limits.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

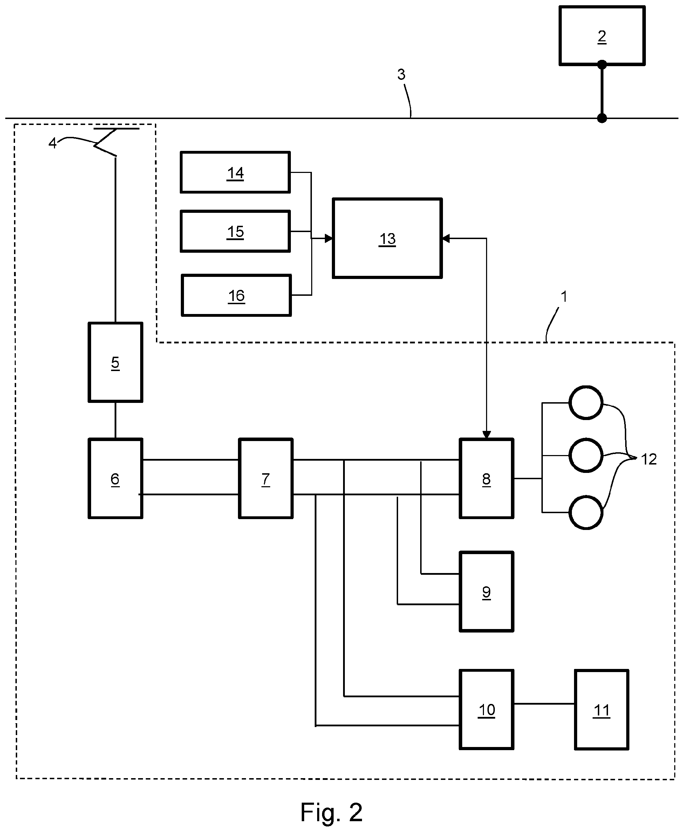

Figure 2 shows schematically a drive system 1 of a train in relation to an external overhead electrical power line 3 which is supplied with power by an electrical substation 2. The substation receives electrical power from the general commercial grid, steps the grid voltage down to a defined AC voltage for railway use, and provides the stepped-down power to the overhead line. As noted previously, the drive system may be located on a single rail vehicle, or its elements can be dispersed across several vehicles of the train.

Components of the drive system 1 are surrounded by a dashed line. The drive system has power extraction equipment in the form of a pantograph 4 to extract AC power from overhead line 3. The pantograph has a contact shoe which may remain in contact with the overhead line even when the train is at a standstill, as discussed below. A circuit breaker 5 makes or breaks connection between the pantograph and the rest of the drive system in accordance with a command from an onboard vehicle controller 13, which may be a dedicated controller for the drive system, or may be a train-wide controller such as a Train Control and Management System (TCMS).

When the circuit breaker 5 is closed, a high voltage transformer 6 steps the electrical power from the overhead line 3 down to a lower level of voltage for use inside the train. Specifically, the transformer supplies the lower voltage AC power to a power converter 7, which then converts the lower voltage AC power into DC power and sends it over a DC-Link to a power inverter 8.

The power inverter 8 converts the received DC power into three phase AC current for producing torque at traction motors 12. In this way, in a first drive mode of the train, the traction motors are supplied with electrical power from just the external electrical power line 3.

The amount of electrical energy consumed is determined by a driver's notch controller 14, which sends a command signal corresponding to a given notch setting to the controller 13. This then relays the signal to the power inverter in a form which allows the power inverter 8 to determine the power consumption needed to create a demanded torque corresponding to the given notch setting.

During regenerative braking, the flow of power can be reversed. In particular, the traction motors 12 operate as generators to produce three phase AC electrical power, which is converted to DC power by the power inverter 8. The DC power can be sent over the DC-Link to the power converter 7, which converts it into AC power. The transformer 6 then steps the AC power back up to the defined AC voltage for supply to the overhead line 3 via the circuit breaker 5 and the pantograph 4.

The drive system 1 also has an OBESS in the form of a large capacity battery 9, and an auxiliary power converter 10. Both of these components receive DC power from the DC link.

In a second, hybrid, drive mode of the train, the battery 9 can assist with the acceleration of the train by supplying electrical power to the DC link, and thence to the power inverter 8 and the traction motors 12, at the same time as electrical power is being supplied from the overhead line 3 via the power converter 7.

In a third drive mode, however, the traction motors are supplied with electrical power from just the battery. An Automatic Power ChangeOver (APCO) system (not shown) installed on the train may include signalling equipment to receive changeover telegrams detected by a beacon reader and relay these on to the controller 13, which then automatically manages changeovers between the three possible drive modes.

During regenerative braking, rather than pushing the electrical power produced by the traction motors 12 operating as generators back to the overhead line 3, the generated electrical power can be diverted via the DC link for storage into the battery 9, as long as there is capacity in the battery to absorb the electrical current associated with the diverted electrical power.

The auxiliary power converter 10 and following equipment 11 form an Auxiliary Power System (APS). The following equipment include, for example, interior lights, displays, air conditioning etc. These require a constant and reliable low AC voltage power supply from the auxiliary power converter irrespective of whether the train is accelerating, cruising, braking or at standstill.

Other inputs to the controller 13 include, for example, an onboard train speed sensor 15 and an onboard train position detection sensor 16.

To make flexible use of the large capacity battery 9, it is desirable on occasions to be able to recharge the battery from the overhead line 3, e.g. while the train is operating in the first drive mode. Conveniently, this can be performed while the train is at a standstill or is cruising such that the train is running essentially just under its own momentum. At such times, the controller 13 controls the power inverter 8 to create an appropriate voltage over the DC-Link to cause the battery to recharge.

During standstill or cruising, although some electrical power is required for the APS, the train does not need to draw electrical power from the overhead line for propulsion. Thus drawing electrical current from the overhead line, in addition to that consumed by the APS, to recharge the battery does not produce an excessive electrical power demand. On the other hand, to reduce the risk of damage to the overhead line and the contact shoe of the pantograph, it can be desirable to limit the amount of electrical current passing through the pantograph when recharging the battery in this way. The risk of damage is a particular concern when the train is at a standstill, because at these times the contact point between the contact shoe and the overhead line is stationary and thus both can easily overheat at the contact point.

However, it can also be beneficial to limit the amount of electrical current being consumed by the train (and therefore passing through the pantograph in the first or third drive mode) when the train is accelerating, in order to lower peak demands on the substation 2. This can then reduce the risk of substation faults developing and/or can reduce a need to provide additional substation infrastructure.

In addition, it can be beneficial to limit the amount of present current passing through the pantograph and being returned to the overhead line 3 during regenerative braking, in order to reduce damage to the overhead line and the contact shoe of the pantograph.

To address these considerations, the controller 13 contains a database which relates operational states of the train to respective limiting values of electrical current allowed to pass through the pantograph. Table 1 provides an example of such a database in which current limits are specified for four operational states of the train (accelerating, regenerative braking, cruising under traction motor zero torque, and at standstill). In general, a substantially constant AC voltage is aimed for in the overhead line 3, and under these circumstances the current limits could be exchanged for equivalent power limits. However, as such a constant voltage cannot always be achieved, it is convenient for the database to set current limits, rather than power limits, in order to manage the power passing through the pantograph 4. Nonetheless, the controller 13 can monitor the voltage of the overhead line 3 using a voltage sensor and automatically apply a factor to regulate the current limits, depending on the monitored voltage value, e.g. such that each regulated current limit corresponds to a respective and constant electrical power limit. Such an approach can help to preserve the integrity of the electrical substation 2 and the train.

**Table 1**

| Operational state | Accelerating | Regenerative braking | Cruising | Standstill |
|---|---|---|---|---|
| Upper limit of current demand (Amps) | 300 | 200 | 200 | 100 |

From the command signal received from the driver's notch controller 14, the controller 13 can determine whether the present operational state of the train is (i) accelerating, (ii) one of cruising and standstill or (iii) regenerative braking. Discrimination between (ii-a) cruising and (ii-b) standstill operational states can then conveniently be determined by the controller using the information from the onboard train speed sensor 15. The controller ensures that the drive system operates in such a way as limit current passing the through the pantograph to the value in the database corresponding to the present operational state.

Typically, the current limit for the train at standstill operational state is less than that for the train cruising state because at standstill there is greater risk of overheating at the contact point of the overhead line 3 and the contact shoe when drawing current from the overhead line to recharge the battery 9.

The greatest need for electrical power extraction from the overhead line 3 generally occurs during the train accelerating operational state, and this is recognised by allocating this state the highest current limit in the database. The other operational states are allocated lower current limits, and these help to reduce the value of peak power demands on the substation 2 from the totality of trains operating in the region of overhead line served by that substation.

However, this concept can be extended further so that the current limits of the train's operational states are also defined by the substation region in which the train is located, i.e. the current limits are functions of train location. For example, Table 2 provides an example of a database in which current limits are specified for four operational states of the train in one region (Region 1) served by a first substation, and are modified for the four operational states in another region served by a second substation (Region 2).

**Table 2**

| | | Region 1 | Region 2 |
|---|---|---|---|
| Upper limit of current demand (Amps) | Accelerating | 300 | 250 |
| | Regenerative braking | 200 | 80 |
| | Cruising | 80 | 60 |
| | Standstill | 60 | 40 |

The current limits stored in the database can thus take account of the maximum load capacity of a given substation (the higher that capacity, the higher the limits can be set) and also the average number of trains in the region of overhead line served by that substation (the higher the average number, the lower the limits can be set, at least for operational states that extract electrical power from the overhead line).

The onboard train position detection sensor 16 informs the controller 13 of where the train is on the rail network and thus allows the controller to determine in which substation region the train is located. The position detection sensor can operate, for example, on the basis of trackside beacons and/or GPS signals.

Additionally or alternatively, the current limit values can be functions of time. For example, Table 3 provides an example of a database in which current limits are specified in a given region for the four operational states during daytime running, and are modified for the four operational states during night time running when traffic densities on the network are lower.

**Table 3**

| | | Night time | Daytime |
|---|---|---|---|
| Upper limit of current demand (Amps) | Accelerating | 300 | 200 |
| | Regenerative braking | 100 | 200 |
| | Cruising | 80 | 40 |
| | Standstill | 60 | 40 |

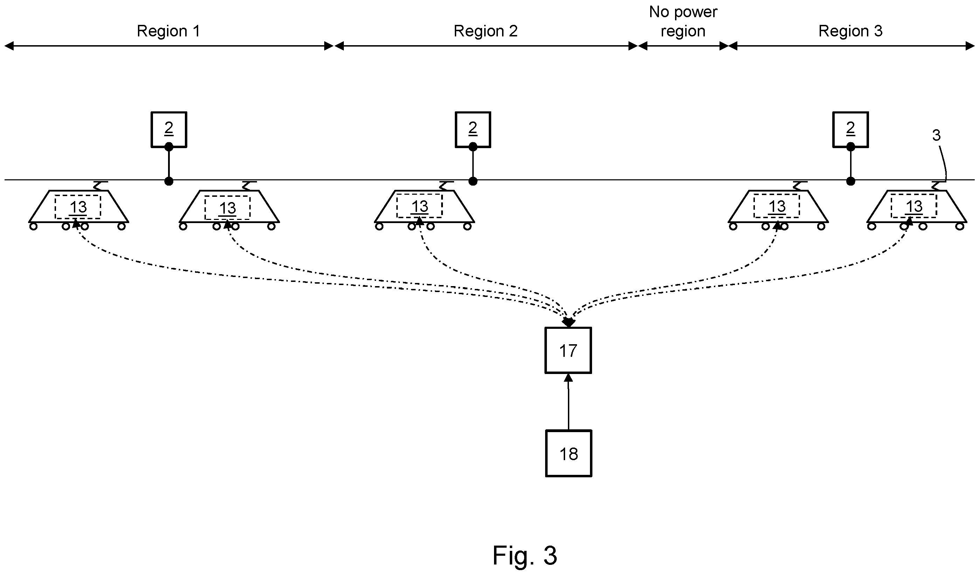

Extending the concept still further, it is possible for the current limits to be time dependent variables that take account of instantaneous traffic densities on the network. For example, as shown schematically in Figure 3, each train may communicate wirelessly with trackside transmitter/receiver devices which in turn communicate with a remote, control centre 17 (the communication links between the trains and the control centre being indicated by dash-dot lines). Using this channel, each train can report its present position to the control centre. Supplemented with timetable information from train operators or timetable management systems 18, the control centre uses the present position information to determine the numbers of trains in different substation regions at the present time and preferably also at different times in the future. It can then use this to calculate suitable adjustments factors to the current limits in each substation region (three regions being shown in Figure 3) for different operational states of the trains, and communicate these adjustment factors back to the trains for implementation by their respective controllers 13 in modifying the limit values in their databases. By following traffic developments and monitoring power consumption levels at the substations, the control centre can continuously update and improve the adjustment factors issued in this way to the trains.

The respective adjustment factor received by the controller 13 of each train can be used to modify the current limits of all the operational states for the present substation region, or just selected operational state(s) such as the accelerating operational state (which generally has the highest limit).

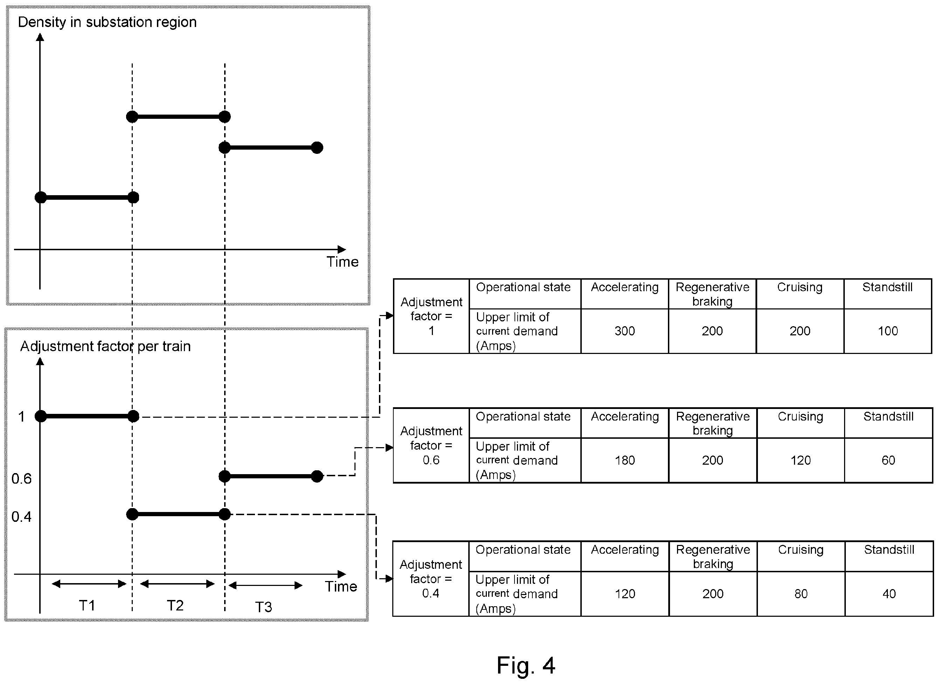

By way of example, Figure 4 provides at top left a graph showing schematically traffic density in a given substation region for three successive time periods, at bottom left a graph showing schematically corresponding adjustment factors as determined by the control centre for the three time periods. To the right are then tables showing the effects of implementing these adjustment factors on the current limits of the accelerating, cruising and standstill operational states for the three time periods, i.e. the operational states which extract power from the overhead line. Although not shown in Figure 4, the current limit for the regenerative braking operational state may be modified under certain circumstances e.g. when there are few or no other trains in the region to absorb regenerated energy, which could then increase the voltage on the overhead line and cause the overvoltage protection of the substation to be damaged.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. An onboard control system (13) for controlling operation of a drive system (1) of a rail vehicle or a train of coupled rail vehicles, wherein the drive system has extraction equipment (4) to extract electrical power from an external electrical power line (3) for onward supply to one or more traction motors (12) of the drive system, and further has an onboard energy storage system (9) for supply of electrical power to the traction motors, the onboard energy storage system being rechargeable by receiving electrical power from the external electrical power line via the extraction equipment, and wherein the train has plural operational states which are at least partly defined by command signals from an operator of the train specifying respective amounts of torque demanded of the traction motors;
wherein the onboard control system (13) has a database which relates the operational states to respective current limit values, and
wherein the onboard control system (13) is configured to: receive the command signals and on the basis thereof determine the present operational state of the train, and control the drive system (1) such that electrical current passing through the extraction equipment (4) does not exceed the current limit value from the database corresponding to the present operational state.

2. The onboard control system (13) according to claim 1, wherein the onboard energy storage system (9) is also rechargeable by using the traction motors (12) to perform regenerative braking, whereby during regenerative braking the command signals specify respective amounts of demanded braking torque.

3. The onboard control system (13) according to claim 1 or 2, wherein the drive system (1) is operable under the control of the control system in:
a first drive mode in which the traction motors (12) are supplied with electrical power from just the external electrical power line (3),
a second, hybrid, drive mode in which the traction motors (12) are supplied with electrical power from the external electrical power line (3) and the onboard energy storage system (9), and
a third drive mode in which the traction motors (12) are supplied with electrical power from just the onboard energy storage system (9).

4. The onboard control system (13) according to any one of the previous claims which is further configured to receive speed measurement signals measuring the speed of the train, and wherein the operational states are also at least partly defined by the speed measurement signals.

5. The onboard control system (13) according to any one of the previous claims, wherein the operational states include: (i) train accelerating, and (ii) train cruising under traction motor zero torque or train at standstill.

6. The onboard control system (13) according to any one of claims 1 to 4, wherein the operational states include: (i) train accelerating, (ii-a) train cruising under traction motor zero torque, and (ii-b) train at standstill.

7. The onboard control system (13) according to claim 6, wherein the respective current limit value for train at standstill is less than the respective current limit value for train cruising.

8. The onboard control system (13) according to any one of claims 5 to 7, wherein the operational states further include: (iii) train regenerative braking.

9. The onboard control system (13) according to any one of the previous claims which is further configured to receive location signals specifying the location of the train, and wherein the database relates each operational state to a respective current limit value which is a function of train location.

10. The onboard control system (13) according to any one of the previous claims, wherein the database relates each operational state to a respective current limit value which is a function of time.

11. The onboard control system (13) according to any one of the previous claims which further has a communication subsystem configured to communicate with a remote control centre (17) and receive therefrom current limit control data, the control system being further configured to adjust the current limit value from the database corresponding to the present operational state on the basis of the current limit control data, such that electrical current passing through the extraction equipment (4) does not exceed the adjusted current limit value.

12. A train including:
a drive system (1) which has extraction equipment (4) to extract electrical power from an external electrical power line (3) for onward supply to one or more traction motors (12) of the drive system, and which further has an onboard energy storage system (9) for supply of electrical power to the traction motors, the onboard energy storage system being rechargeable by receiving electrical power from the external electrical power line via the extraction equipment, and wherein the train has plural operational states which are at least partly defined by command signals from an operator of the train specifying respective amounts of torque demanded of the traction motors; and
a control system (13) according to any one of the previous claims for controlling operation of the drive system (1).

13. A method of controlling operation of a drive system (1) of a train, wherein the drive system has extraction equipment (4) to extract electrical power from an external electrical power line (3) for onward supply to one or more traction motors (12) of the drive system, and further has an onboard energy storage system (9) for supply of electrical power to the traction motors, the onboard energy storage system being rechargeable by receiving electrical power from the external electrical power line via the extraction equipment, and wherein the train has plural operational states which are at least partly defined by command signals from an operator of the train specifying respective amounts of torque demanded of the traction motors;
the method including:
providing a database which relates the operational states to respective current limit values,
receiving the command signals; and
on the basis of the command signals, determining the present operational state of the train, and controlling the drive system (1) such that electrical current passing through the extraction equipment (4) does not exceed the current limit value from the database corresponding to the present operational state.

14. A rail network having plural regions, each region having an external electrical power line (3) supplied with electrical power by a respective substation (2), the rail network further including:
plural trains according to claim 12 as dependent on claim 11 running on the network; and
a control centre (17) configured to communicate with the trains via their communication subsystems;
wherein each communication subsystem is configured to communicate with the control centre (17) and receive therefrom current limit control data, the control system (13) of each train being further configured to adjust the current limit value from its database corresponding to the present operational state of its train on the basis of the received current limit control data, such that electrical current passing through its extraction equipment (4) does not exceed the adjusted current limit value.

15. A method of operating trains on a rail network having plural regions, each region having an external electrical power line (3) supplied with electrical power by a respective substation (2), wherein each train includes a respective drive system (1) which has extraction equipment (4) to extract electrical power from the external electrical power line for onward supply to one or more traction motors (12) of the drive system, and further has an onboard energy storage system (9) for supply of electrical power to the traction motors, the onboard energy storage system being rechargeable by receiving electrical power from the external electrical power line via the extraction equipment, and wherein each train has plural operational states which are at least partly defined by command signals from an operator of the train specifying respective amounts of torque demanded of the traction motors, wherein the method includes:
performing the method according to claim 13 to control the operation of the drive system (1) of each train;
determining the number of trains in each region of the network;
calculating, on the basis of the determined numbers, respective adjustment factors to the current limits in each region for different operational states of the trains; and
adjusting, for the drive system (1) of each train, the current limit value from the drive system's database corresponding to the present operational state of the train on the basis of the adjustment factor corresponding to the region in which the train is located and that operational state, such that electrical current passing through the drive system's extraction equipment (4) does not exceed the adjusted current limit value.
